# EUROPEAN PATENT APPLICATION

(11) **EP 3 670 341 A1**
(43) Date of publication of application: **24.06.2020**
(21) Application number: 19215304.7
(22) Date of filing: 11.12.2019
(51) Int. Cl.: B64C 29/00

(54) **VERTICAL TAKEOFF AND LANDING (VTOL) AIRCRAFT**

(30) Priority: 18.12.2018 US 201862781105 P
(71) Applicant: Bombardier Inc., Dorval QC H4S1Y9 (CA)
(72) Inventor: MOKHTARIAN, Farzad, Quebec, H9X 1R4 (CA); GALIN, Alexandre, Quebec, H2X 1J2 (CA)
(74) Representative: HGF Limited

(57) **Abstract**

A vertical takeoff and landing (VTOL) aircraft comprises a fuselage. A pair of wings is fixedly connected to the fuselage. A pair of horizontal stabilizers is fixedly connected to the fuselage and spaced from the pair of wings along a longitudinal axis. At least one fan is ducted within each wing of the pair of wings and within each horizontal stabilizer. The at least one fan has a fan axis defined by a fan hub. The fan axis has a fan axis orientation defined in a frame of reference of the VTOL aircraft. The fan axis orientation is invariable in the frame of reference. At least one thrust unit is mounted to the fuselage. The at least one thrust unit has a thrust unit axis defined by the thrust unit hub.

## Description

### TECHNICAL FIELD

The application relates generally to aircraft and, more particularly, to a vertical takeoff and landing (VTOL) aircraft.

### BACKGROUND

A vertical takeoff and landing (VTOL) aircraft having fixed-wings often relies on flight control surfaces to adjust and control flight attitude. The flight control surfaces may include movable parts such as ailerons, elevators, and rudders. Flight control surfaces add weight to VTOL aircraft, and make operation and maintenance more complicated.

### SUMMARY

In one aspect, there is provided a vertical takeoff and landing (VTOL) aircraft comprising: a fuselage extending along a longitudinal axis from a fore end to an aft end, the fuselage having a port side and a starboard side; a pair of wings fixedly connected to the fuselage and including a port wing extending from the port side and a starboard wing extending from the starboard side; a pair of horizontal stabilizers fixedly connected to the fuselage and spaced from the pair of wings along the longitudinal axis, the pair of horizontal stabilizers including a port horizontal stabilizer extending from the port side and a starboard horizontal stabilizer extending from the starboard side; at least one fan ducted within each wing of the pair of wings and within each horizontal stabilizer of the pair of horizontal stabilizers, the at least one fan having a fan hub and a plurality of fan blades extending from the fan hub, the fan hub and the fan blades being rotatable about a fan axis defined by the fan hub, the fan axis having a fan axis orientation defined in a frame of reference of the VTOL aircraft, the fan axis orientation being invariable in the frame of reference; and at least one thrust unit mounted to the fuselage, the at least one thrust unit having a thrust unit hub and a plurality of thrust unit blades extending from the thrust unit hub, the thrust unit hub and the thrust unit blades being rotatable about a thrust unit axis defined by the thrust unit hub.

Preferably the at least one fan includes multiple fans, the port wing having some of the multiple fans and the starboard wing having an equal number of the multiple fans as the port wing.

Preferably the at least one fan includes multiple fans disposed on at least one wing of the port and starboard wings, the multiple fans including a first fan having a first fan diameter and a second fan having a second fan diameter, the first fan diameter being smaller than the second fan diameter.

Preferably said at least one wing of the port and starboard wings extends from the fuselage to a wing tip, the first fan located closer to the wing tip than the second fan.

Preferably the at least one fan includes multiple fans, the port horizontal stabilizer having some of the multiple fans and the starboard horizontal stabilizer having an equal number of the multiple fans as the port horizontal stabilizer.

Preferably there are provided louvers associated with the at least one fan to vary a direction of a fan thrust generated by the at least one fan.

Preferably the pair of wings is free of flight control surfaces.

Preferably the port and starboard wings have a constant wing camber measured at any given cross-section of the port and starboard wings taken along a span thereof.

Preferably the pair of horizontal stabilizers is free of control surfaces.

Preferably the port and starboard horizontal stabilizers have a constant horizontal stabilizer camber measured at any given cross-section of the port and starboard horizontal stabilizers taken along a span thereof.

Preferably the thrust unit axis has a thrust unit axis orientation defined in the frame of reference of the VTOL aircraft, the thrust unit axis being invariable in the frame of reference.

Preferably the fuselage includes solar cells disposed thereon.

Preferably each fan of the at least one fan has its own electric motor.

Preferably at least one wing of the pair of wings has a constant wing area.

Preferably at least one horizontal stabilizer of the pair of horizontal stabilizers has a constant horizontal stabilizer area.

Preferably the at least one thrust unit includes a port thrust unit and a starboard thrust unit, the port thrust unit mounted to the port side of the fuselage and the starboard thrust unit mounted to the starboard side.

Preferably the at least one thrust unit is mounted to the aft end of the fuselage.

Preferably the at least one fan is an electrically powered fan.

Preferably the at least one thrust unit is an electrically powered fan.

Preferably the at least one fan has a variable rotational speed.

In another aspect, there is provided a method of operating a vertical takeoff and landing (VTOL) aircraft, the method comprising: powering a plurality of first fans ducted within wings of the VTOL aircraft; powering a plurality of second fans ducted within horizontal stabilizers of the VTOL aircraft axially spaced apart from the wings; and powering at least one thrust unit mounted to a fuselage of the VTOL aircraft.

Preferably the method of powering the plurality of first fans includes rolling the VTOL aircraft by only adjusting a thrust of at least one first fan of the plurality of first fans.

Preferably the method of powering the plurality of second fans includes pitching the VTOL aircraft by only adjusting a thrust of at least one second fan of the plurality of second fans.

Preferably the method comprises yawing the VTOL aircraft by only adjusting powers of the plurality of first fans and/or powers of the plurality of second fans.

Preferably the method of powering the plurality of first fans includes powering the plurality of first fans during forward flight of the VTOL aircraft and during take-off of the VTOL aircraft, the plurality of first fans having a forward flight thrust during forward flight being less than a take-off thrust of the plurality of first fans during take-off.

Preferably the method comprises powering the plurality of first fans during forward flight and during take-off and includes reducing the take-off thrust to the forward flight thrust as the VTOL aircraft transitions from take-off to forward flight.

Preferably the method of powering the plurality of first fans includes varying a rotational speed of at least one first fan of the plurality of first fans.

Preferably the method of powering the plurality of first fans and powering the plurality of second fans includes maintaining invariable an orientation of a first axis of rotation of each fan of the plurality of first fans and an orientation of a second axis of rotation of each fan of the plurality of second fans in a frame of reference of the VTOL aircraft.

Preferably the method of powering the plurality of second fans includes varying a rotational speed of at least one second fan of the plurality of second fans.

Preferably the method of powering the plurality of first fans, powering the plurality of second fans, and powering the at least one thrust unit includes powering the first and second fans and the at least one thrust unit using only electrical power.

### DESCRIPTION OF THE DRAWINGS

Reference is now made to the accompanying figures in which:
Fig. 1 is a schematic perspective view of a vertical takeoff and landing (VTOL) aircraft; and
Fig. 2 is a view of the VTOL aircraft of Fig. 1 having one thrust unit.

### DETAILED DESCRIPTION

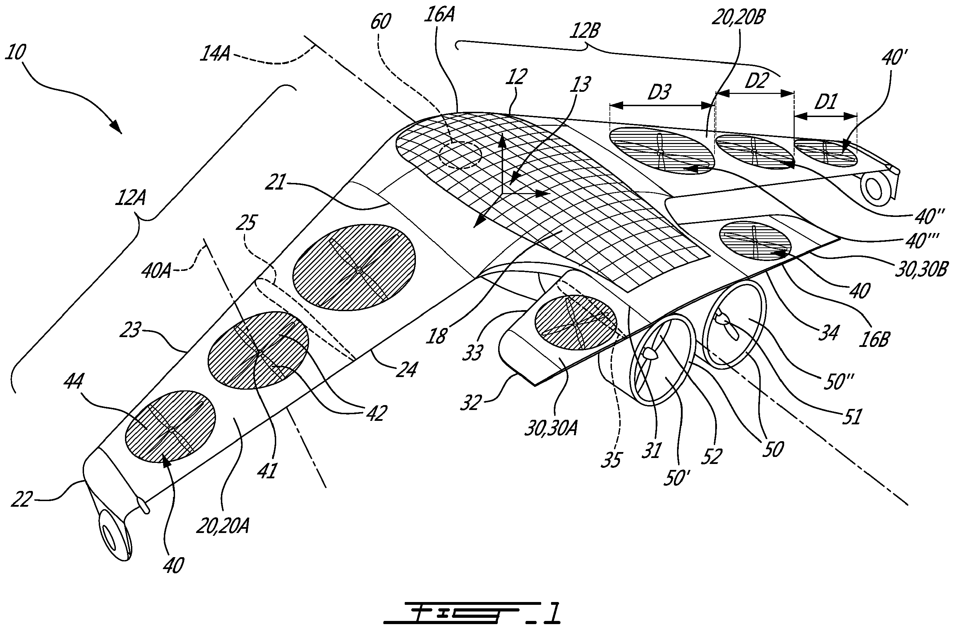

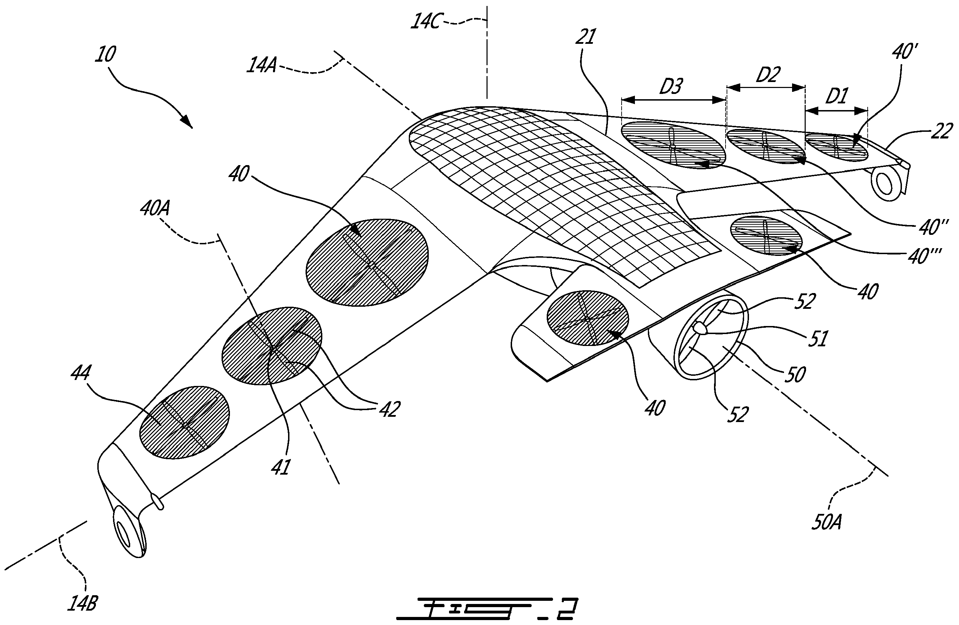

Figs. 1 and 2 illustrate a vertical takeoff and landing (VTOL) aircraft 10. The VTOL aircraft 10 is capable of hovering, take-off, and landing vertically or over reduced lengths. The VTOL aircraft 10 may therefore be used in urban centres as an urban transport vehicle, for example. The VTOL aircraft 10 in the depicted embodiment is an electric vertical takeoff and landing aircraft 10, whose lift and thrust components are powered entirely by electricity. The VTOL aircraft 10 may therefore be referred to as an "eVTOL" aircraft 10. The VTOL aircraft 10 includes a fuselage 12 extending along a longitudinal axis 14A from a fore end 16A to an aft end 16B. The fuselage 12 is intended to refer to the main body of the VTOL aircraft 10. The fuselage 12 may therefore contain spaces for occupants and/or cargo, flight instruments and controls, and attachment points to other major aircraft components such as wings, tail, propulsion systems, landing gear, and the like. The fuselage 12 has a port side 12A and a starboard side 12B. The fuselage 12 in the depicted embodiment includes solar cells 18 disposed thereon. The solar cells 18 provide electrical energy to power components and systems of the VTOL aircraft 10.

As shown in the embodiment of Fig. 1, a pair of wings 20 is fixedly connected to the fuselage 12. The term "wing" is intended to refer broadly to any suitable lift-creating aerodynamic structure that engages an air flow to provide lift. As such, the wing 20 is any suitable airfoil or streamline surface to provide lift when airflow passes over the wings 20. The term "wing" may also be used to refer to a main lift-creating structure relative to other lifting surfaces, such as stabilizers. The term "fixedly connected" is intended to imply that the wings 20 are not displaceable with respect to the fuselage 12. In other words, the wings 20 do not move with respect to the fuselage 12 to produce lift. The configuration of the VTOL aircraft 10 may therefore be referred to as "fixed-wing aircraft". As such, the wings 20 and the fuselage 12 may be immovably fastened together. It is understood that normal deflection (under load) of the wings 20 through the air in response to a flight of the VTOL aircraft 10 may occur. For example, lift generated by the wings 20 may deflect the wings 20 with respect to the fuselage 12, while maintaining the wings 20 fixedly connected to the fuselage 12. The wings 20 include a port wing 20A extending from the port side 12A of the fuselage 12 and a starboard wing 20B extending from the starboard side 12B.

Each wing 20 extends from a root 21 to a wingtip 22 to define a span of the wing 20, and also extends between a leading edge 23 and a trailing edge 24. A wing camber, or camber, is defined at any given cross-section 25 of the wing 20 taken along its span. The wing camber extends from the leading edge 23 of the wing 20 to the trailing edge 24 of the wing 20. The wings 20 in the depicted embodiment extend transversely or radially from the longitudinal axis 14A. For example, the wing 20 may extend in a straight sideways direction from its root 21. In some embodiments, the wing 20 may be swept relative to its root 21. For example, the VTOL aircraft 10 may include forward-swept wings 20 and/or rear-swept wings 20. That is, the wing 20 may be angled backwardly and/or forwardly relative to the fuselage 12. The VTOL aircraft 10 shown in Fig. 1 has two wings 20A, 20B.

The wings 20 in the depicted embodiment are free of flight control surfaces. The term "flight control surface" refers to movable aerodynamic devices that are used to adjust and control a flight attitude of an aircraft. Typical flight control surfaces include ailerons, elevator, rudder, spoilers, flaps, slats, and the like. The flight control surfaces can be attached to a wing via hinges or tracks to move and deflect the airflow passing over them. Conventional moveable flight control surfaces effectively change the camber of a conventional wing. In contrast, the wing 20 of the depicted embodiment, which is free of moveable flight control surfaces, has a wing camber distribution measured at any of the cross-sections 25 taken transverse to the span of the wing 20 that is constant and invariable. That is, the wing camber distribution of the wing 20 in the depicted embodiment does not vary because the wing 20 has no movable flight control surfaces.

Conventional moveable flight control surfaces also change the area of a conventional wing when they are deployed. In contrast, the wing 20 in the depicted embodiment has a constant wing area. The "wing area" is intended to refer to a projected area of the wing that is bounded by the leading and trailing edges 23, 24, the root 21, and the wingtip 22.

The VTOL aircraft 10 includes a pair of horizontal stabilizers 30 fixedly connected to the fuselage 12. The horizontal stabilizer 30 is intended to refer broadly to any suitable lift-creating aerodynamic structure that engages the airflow to provide lift. It is noted that the lift produced by the horizontal stabilizer 30 may act in an upward or a downward direction relative to the fuselage 12. The upward direction of lift is a direction that counters the force of gravity. As such, the horizontal stabilizer 30 is intended to encompass any suitable airfoil surface to provide lift when air flows over the horizontal stabiliser 30. The term "fixedly connected" is intended to imply that the horizontal stabilizers 30 are not displaceable with respect to the fuselage 12. As such, the horizontal stabilizers 30 and the fuselage 12 may be immovably fastened together. It is understood that normal deflection of the horizontal stabilizers 30 through the air in response to the flight of the VTOL aircraft 10 may be present. For example, lift generated by the horizontal stabilizers 30 may deflect the horizontal stabilizers 30 with respect to the fuselage 12, while maintaining the horizontal stabilizers 30 fixedly connected to the fuselage 12. The horizontal stabilizers 30 are spaced from the wings 20 along the longitudinal axis 14A. In the depicted embodiment, the horizontal stabilizers 30 are positioned closer to the aft end 16B of the fuselage 12 than the wings 20. In an alternate embodiment, the horizontal stabilizers 30 are positioned closer to the fore end 16A of the fuselage 12 than the wings 20. The horizontal stabilizers 30 include a port horizontal stabilizer 30A extending from the port side 12A of the fuselage 12 and a starboard horizontal stabilizer 30B extending from the starboard side 12B.

In operation, the lift generated by the horizontal stabilizers 30 may be less than the lift generated by the wings 20. For example, the area of the horizontal stabilizer 30 is less than the area of the wing 20 in the depicted embodiment. The aerodynamic design of the horizontal stabilizer 30 may generate less lift than the aerodynamic design of wing 20.

The horizontal stabilizer 30 extends from a root 31 to a stabilizer tip 32 to define a span of the horizontal stabilizer 30, and also extends between a leading edge 33 and a trailing edge 34. A stabilizer camber, or camber, is defined at any given cross-section 35 of the horizontal stabilizer 30 taken along the span. The camber extends from the leading edge 33 of the horizontal stabilizer 30 to the trailing edge 34 of the horizontal stabilizer 30. The horizontal stabilizers 30 extend transversely or radially from the longitudinal axis 14A. For example, the horizontal stabilizer 30 may extend in a straight sideway direction from its root 31. In some embodiments, the horizontal stabilizer 30 may be swept relative to the fuselage 12. For example, the VTOL aircraft 10 may include forward-swept horizontal stabilizers and/or rear-swept horizontal stabilizers. That is, the horizontal stabilizer 30 may be angled backwardly or forwardly from the fuselage 12. The VTOL aircraft 10 shown in Fig. 1 has two horizontal stabilizers 30. In some embodiments, the VTOL aircraft 10 may have more than two horizontal stabilizers 30.

In the embodiment shown in Fig. 1, the horizontal stabilizers 30 are positioned toward the aft end 16B relative to the wings 20 and axially spaced apart from the wings 20. In some embodiments, the horizontal stabilizers 30 may be positioned forward of the wings 20 toward the fore end 16A. In other words, the horizontal stabilizers 30 may have a canard arrangement. The horizontal stabilizers 30 in the depicted embodiment are positioned at a same vertical level as the wings 20, or in the same horizontal plane. The horizontal stabilizers 30 may be vertically spaced apart relative to the wings 20.

The horizontal stabilizers 30 in the depicted embodiment are free of moveable flight control surfaces. As such, the horizontal stabilizer 30 has a stabilizer camber distribution, measured at any given cross-sections of the horizontal stabilizer 30 taken along a span thereof, that is constant and invariable. That is, the stabilizer camber of the cross-section 35 would remain constant because the horizontal stabilizer 30 does not have movable flight control surfaces.

The horizontal stabilizer 30 also has a constant horizontal stabilizer area in the depicted embodiment. The "horizontal stabilizer area" is intended to refer to a projected area of the horizontal stabilizer 30 that is bounded by the leading and trailing edges 33, 34, the root 31, and the stabilizer tip 32.

The VTOL aircraft 10 includes one or more fans 40 ducted within each wing 20 and within each horizontal stabilizer 30. The term "ducted fan" is intended to refer to a fan disposed within a duct. The duct delimits an opening extending through the wing 20 and/or the horizontal stabilizer 30 between a pressure side and a suction side. The fan 40 is disposed within the opening. In some embodiments, the fan 40 may be disposed between a front spar and a rear spar of the wing 20. The fan 40 rotates to accelerate air through the duct and produce lift or thrust. The air flowing through the duct may be referred to as a bypass flow. The duct may be defined in the wing 20 and/or the horizontal stabilizer 30. The fan 40 may be an axial fan. A function of the fan 40 is to generate lift or thrust. For example, during take-off and landing of the VTOL aircraft 10, the fans 40 rotate to generate lift. As such, the VTOL aircraft 10 may take-off vertically or over relatively short distances. During the vertical take-off and vertical landing, the wings 20 and the horizontal stabilizers 30 may not generate sufficient lift. The fans 40 may generate the required lift to operate the VTOL aircraft 10. The fan 40 may be an electrically powered fan. At least some of the electrical energy needed to operate the fan 40 may be provided to the fan 40 via the solar cells 18. Each fan 40 of the VTOL aircraft 10 may have its own electric motor.

The fan 40 in the depicted embodiment has a fan hub 41 and fan blades 42 extending from the fan hub 41. The fan hub 41 and fan blades 42 rotate about a fan axis 40A defined by the fan hub 41. In other words, the fan blades 42 may extend radially from the fan hub 41 and the fan axis 40A. The fan axis 40A has a fan axis orientation defined in a frame of reference 13 of the VTOL aircraft 10. The frame of reference 13 of the VTOL aircraft 10 is a three-dimensional coordinate system in relation to which measurements of size, position, or motion can be made. The frame of reference 13 moves with the VTOL aircraft 10, and its orientation with respect to another reference system (e.g. a ground-based reference system) changes with the orientation of the VTOL aircraft 10 in this other reference system. The orientation of the fan axis 40A describes how the fan axis 40A is positioned in the frame of reference 13. For example, the fan axis 40A may have an orientation defined relative to the fuselage 12 in the frame of reference 13 to provide a lift force in a specific direction. Each fan 40 may have the same fan axis orientation or a different fan axis orientation.

The fan axis orientation of the fan axis 40A of each fan 40 in the depicted embodiment is invariable in the frame of reference 13. In other words, the fan 40 is fixed in place in the frame of reference 13. The fan axis orientation does not change in the frame of reference 13 during flight operations or modes of the VTOL aircraft 10. For example, the orientation of the fan axis 40A does not change in the frame of reference 13 during a roll, pitch, and/or yaw of the VTOL aircraft 10. It is understood that the fan axis orientation may remain invariable while changing a pitch of the fan blades 42. As such, the fan 40 may have variable pitch blades 42.

In the depicted embodiment, the port wing 20A has multiple fans 40 and the starboard wing 20B also has multiple fans 40. The port wing 20A has an equal number of fans 40 as the starboard wing 20B. In an alternate embodiment, the number of fans 40 in the port and starboard wings 20A, 20B is unequal.

Referring to Fig. 1, the port wing 20A has three fans 40 and the starboard wing 20B has three fans 40. A first fan 40' of the three fans 40 has a first fan diameter D1, a second fan 40" has a second diameter D2, and a third fan 40'" has a third diameter D3. The first fan diameter D1 is smaller than the second fan diameter D2, and the second fan diameter D2 is smaller than the third fan diameter D3. The fan diameter may be measured from a tip of a fan blade 42 to a center of the fan hub 41, multiplied by two. The first fan 40' is disposed toward the wingtip 22 of the wing 20 and the third fan 40'" is disposed toward the root 21 of the wing 20. The second fan 40" is disposed between the first and third fans 40',40"'. As such, a fan with a lower power may be located near the wingtip 22 and a fan with higher power may be located near the root 21. For example, the roll may be accomplished by the fan 40 near the wingtip 22. A smaller thrust force may enable the roll of the VTOL aircraft 10. The chords of the airfoil cross-sections of the wing 20 near the root 21 may be larger than the chords of the airfoil cross-sections of the wing 20 near the wingtip 22. As such, the fan 40 with a larger diameter and/or power can be positioned closer to the fuselage 12.

The port horizontal stabilizer 30A may have multiple fans 40 and the starboard horizontal stabilizer 30B may have multiple fans 40. The port horizontal stabilizer 30A in the depicted embodiment has an equal number of fans 40 as the starboard horizontal stabilizer 30B. In some embodiments, the number of fans 40 may be different between the port and starboard horizontal stabilizers 30A, 30B. For example, a larger fan on one horizontal stabilizer 30 may correspond to two smaller fans on the other horizontal stabilizer 30. In some embodiments, an additional fan may be provided on one of the horizontal stabilizers 30 for redundancy and/or other flight management requirements.

The VTOL aircraft 10 may include louvers 44 associated with the fan 40 to vary a direction of a fan thrust or lift generated by the fan 40. The louvers 44 may cover the opening of the duct that is defined in the pressure side of the wing 20 and/or horizontal stabilizer 30. The louvers 44 may close the opening of the fan 40, for example if the VTOL aircraft 10 is flying fast enough to generate lift from the wings 20.

The VTOL aircraft 10 also includes one or more thrust units 50 mounted to the fuselage 12. The thrust unit 50 is provided to generate a forward thrust for the VTOL aircraft 10. In operation, the thrust unit 50 may provide at least a portion of the forward thrust to accelerate the VTOL aircraft 10, thereby allowing the wings 20 and the horizontal stabilizers 30 to generate lift.

The thrust unit 50 has a thrust unit hub 51 and thrust unit blades 52 extending from the thrust unit hub 51. The thrust unit hub 51 and thrust unit blades 52 rotate about a thrust unit axis 50A defined by the thrust unit hub 51. In other words, the thrust unit blades 52 may extend radially from the thrust unit axis 50A. The thrust unit axis 50A has a thrust unit axis orientation defined in the frame of reference 13 of the VTOL aircraft 10. The orientation of the thrust unit axis 50A describes how the thrust unit axis 50A is positioned in the frame of reference 13. For example, the thrust unit axis 50A may be oriented in the frame of reference 13 and relative to the fuselage 12 to provide forward thrust in a specific direction.

The orientation of the thrust unit axis 50A is invariable in the frame of reference 13. In other words, the thrust unit 50 is fixed in place in the frame of reference 13. The orientation of the thrust unit axis 50A does not change in the frame of reference during flight operations or modes of the VTOL aircraft 10. For example, the orientation of the thrust unit axis 50A does not change in the frame of reference 13 during the roll, pitch, and/or yaw of the VTOL aircraft 10. It is understood that the orientation of the thrust unit axis 50A remains invariable even if a pitch of the thrust unit blades 52 is varied. As such, the thrust unit 50 may have variable pitch blades 52.

The thrust unit 50 may have a thrust vector which may remain constant in the frame of reference 13 while operating the VTOL aircraft 10. In some embodiments, the thrust vector may be substantially parallel to the longitudinal axis 14A. The thrust unit 50 may be an electrically powered fan. At least some of the electrical energy needed to operate the thrust unit 50 may be provided to the thrust unit 50 via the solar cells 18. Each thrust unit 50 of the VTOL aircraft 10 may have its own electric motor.

The thrust unit 50 in the depicted embodiment is mounted to the aft end 16B of the fuselage 12, and is positioned aft of the wings 20. As shown in Figs. 1 and 2, the thrust unit 50 is positioned behind the fuselage 12 and shielded by a shape of the fuselage 12 to minimize drag during forward flight of the VTOL aircraft 10. In some embodiments, the rear of the fuselage 12 may have "tear-drop" cross-sectional shape, and the thrust unit 50 may suck in air off a side of the tear-drop shaped fuselage 12.

In the embodiment shown in Fig. 1, the VTOL aircraft 10 has two thrust units 50. The VTOL aircraft 10 includes a port thrust unit 50' mounted to the port side 12A of the fuselage 12 and a starboard thrust unit 50" mounted to the starboard side 12B. In an alternate embodiment, as shown in Fig. 2, the VTOL aircraft 10 has only one thrust unit 50. The VTOL aircraft 10 may have any suitable number of thrust units 50 to provide the required thrust. The VTOL aircraft 10 shown in Fig. 2 is identical to the VTOL aircraft 10 shown in Fig. 1 except for the single thrust unit 50 in Fig. 2, and therefore like reference numbers are used to denote like features.

In use, the VTOL aircraft 10 may be operated by powering the fans 40 of the wings 20 and/or the fans 40 of the horizontal stabilizers 30. Operating the VTOL aircraft 10 may include taking-off, landing, maneuvering, cruising, and the like. For example, the fans 40 may be powered for vertical take-off and landing. The thrust of the fan 40 may be adjusted by adjusting the power of the fan 40 and/or a pitch angle of the fan blades 42. For a forward flight, the power and/or thrust of the fans 40 may be reduced compared to the required power and/or thrust required for the vertical take-off and landing. In other words, the wings 20 and/or the horizontal stabilizers 30 can generate lift during the forward flight. The thrust unit 50 may be powered to provide forward thrust.

The VTOL aircraft 10 may be rotated in flight about the longitudinal axis 14A, a transverse axis 14B, and a vertical axis 14C. The VTOL aircraft 10 may be rolled about the longitudinal axis 14A by only adjusting a thrust of one or more of the fans 40, for example, by adjusting the thrust of one or more fans 40 mounted to the wings 20. The VTOL aircraft 10 may be pitched about the transverse axis 14B by only adjusting a thrust of one or more fans 40, for example, by adjusting the thrust of one or more fans 40 mounted to the horizontal stabilizers 30. The VTOL aircraft 10 may be yawed about the vertical axis 14C by only adjusting the power between the thrust units 50, or by adjusting powers and/or rotational speed (i.e. RPM) of one or more fans 40. In other words, the roll, the pitch, and the yaw of the VTOL aircraft 10 may be adjusted without using any flight control surfaces which deflect airflow passing over the control surfaces.

Referring to Fig. 1, the VTOL aircraft 10 may include a flight management system 60. The flight management system 60 may control the thrust and/or power of the fans 40 and/or of the thrust units 50 to operate the VTOL aircraft 10 as described above. The flight management system 60 may control other systems such as the louvers 44, solar cells 18, and the like. In some embodiments, all the fans 40 may contribute to the lift of the VTOL aircraft 10. As the VTOL aircraft 10 is taking off, one or more of the fans 40 may direct some of the thrust toward the aft to generate forward thrust. As the VTOL aircraft 10 moves forward, the thrust and/or power of the fans 40 may be reduced because the wings 20 and optionally the horizontal stabilizers 30 may generate lift and thus the fans 40 may not need to produce all the lift to sustain the flight of the VTOL aircraft 10. For example, during a vertical take-off, the fans 40 may start by generating the required lift. Once the VTOL aircraft 10 is at a predetermined altitude, the thrust unit 50 may begin to generate forward thrust. As the VTOL aircraft 10 accelerates and the wings 20 and/or horizontal stabilizers 30 begin to generate lift, the thrust generated by the fans 40 may be reduced. The landing of the VTOL aircraft 10 may include these steps in reverse. In some embodiments, controlling the fans 40 may control the descent rate, the ascent rate, the brake rate of the VTOL aircraft 10. The fans 40 of the VTOL aircraft 10 may also allow the VTOL aircraft 10 to hover.

The fans 40 may thus generate lift in the same lift-generation structures, such as in the wings 20 and in the horizontal stabilizers 30. The use of electric fans may reduce noise and emissions. In some embodiments, the fans 40 of the port wing 20A may be coupled with the fans 40 in the starboard wing 20B. As such, a pair of coupled fans 40 may work together, one in the port wing 20A and one in the starboard wing 20B.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure, and such modifications are intended to fall within the appended claim

## Claims

1. A vertical takeoff and landing (VTOL) aircraft (10) comprising:
a fuselage (12) extending along a longitudinal axis (14A) from a fore end (16A) to an aft end (16B), the fuselage (12) having a port side (12A) and a starboard side (12B);
a pair of wings (20) fixedly connected to the fuselage (12) and including a port wing (20A) extending from the port side (12A) and a starboard wing (20B) extending from the starboard side (12B);
a pair of horizontal stabilizers (30) fixedly connected to the fuselage (12) and spaced from the pair of wings (20) along the longitudinal axis (14A), the pair of horizontal stabilizers (30) including a port horizontal stabilizer (30A) extending from the port side (12A) and a starboard horizontal stabilizer (30B) extending from the starboard side (12B);
at least one fan (40) ducted within each wing of the pair of wings (20) and within each horizontal stabilizer of the pair of horizontal stabilizers (30), the at least one fan (40) having a fan hub (41) and a plurality of fan blades (42) extending from the fan hub (41), the fan hub (41) and the fan blades (42) being rotatable about a fan axis (40A) defined by the fan hub (41), the fan axis (40A) having a fan axis orientation defined in a frame of reference (13) of the VTOL aircraft (10), the fan axis orientation being invariable in the frame of reference (13); and
at least one thrust unit (50) mounted to the fuselage (12), the at least one thrust unit (50) having a thrust unit hub (51) and a plurality of thrust unit blades (52) extending from the thrust unit hub (51), the thrust unit hub (51) and the thrust unit blades (52) being rotatable about a thrust unit axis (50A) defined by the thrust unit hub (51).

2. The VTOL aircraft (10) as defined in claim 1, wherein the at least one fan (40) includes multiple fans, the port wing (20A) having some of the multiple fans and the starboard wing (20B) having an equal number of the multiple fans as the port wing (20A).

3. The VTOL aircraft (10) as defined in claim 1 or 2, wherein the at least one fan (40) includes multiple fans disposed on at least one wing of the port and starboard wings (20), the multiple fans including a first fan (40') having a first fan diameter (D1) and a second fan (40") having a second fan diameter (D2), the first fan diameter (D1) being smaller than the second fan diameter (D2).

4. The VTOL aircraft (10) as defined in claim 3, wherein said at least one wing of the port and starboard wings (20) extends from the fuselage (12) to a wing tip, the first fan (40') located closer to the wing tip than the second fan (40").

5. The VTOL aircraft (10) as defined in any one of claims 1 to 4, wherein the at least one fan (40) includes multiple fans, the port horizontal stabilizer (30A) having some of the multiple fans and the starboard horizontal stabilizer (30B) having an equal number of the multiple fans as the port horizontal stabilizer (30A).

6. The VTOL aircraft (10) as defined in any one of claims 1 to 5, comprising louvers (44) associated with the at least one fan (40) to vary a direction of a fan thrust generated by the at least one fan (40).

7. The VTOL aircraft (10) as defined in any one of claims 1 to 6, wherein the pair of wings (20) is free of flight control surfaces.

8. The VTOL aircraft (10) as defined in any one of claims 1 to 7, wherein the port and starboard wings (20) have a constant wing camber measured at any given cross-section of the port and starboard wings (20) taken along a span thereof.

9. The VTOL aircraft (10) as defined in any one of claims 1 to 8, wherein the pair of horizontal stabilizers (30) is free of control surfaces.

10. The VTOL aircraft (10) as defined in any one of claims 1 to 9, wherein the port and starboard horizontal stabilizers (30) have a constant horizontal stabilizer camber measured at any given cross-section of the port and starboard horizontal stabilizers (30) taken along a span thereof.

11. The VTOL aircraft (10) as defined in any one of claims 1 to 10, wherein the thrust unit axis (50A) has a thrust unit axis (50A) orientation defined in the frame of reference (13) of the VTOL aircraft (10), the thrust unit axis (50A) being invariable in the frame of reference (13).

12. The VTOL aircraft (10) as defined in any one of claims 1 to 11, wherein the fuselage (12) includes solar cells (18) disposed thereon.

13. The VTOL aircraft (10) as defined in any one of claims 1 to 12, wherein each fan of the at least one fan (40) has its own electric motor.

14. The VTOL aircraft (10) as defined in any one of claims 1 to 13, wherein at least one wing of the pair of wings (20) has a constant wing area.

15. The VTOL aircraft (10) as defined in any one of claims 1 to 13, wherein at least one horizontal stabilizer of the pair of horizontal stabilizers (30) has a constant horizontal stabilizer area.
